# FASCICULE DE BREVET EUROPEEN

(11) **EP 2 766 576 B1**
(45) Date de publication et mention de la délivrance du brevet: **01.08.2018**
(21) Numéro de dépôt: 12779122.6
(22) Date de dépôt: 10.10.2012
(51) Int. Cl.: F01D 5/08, F01D 5/30, F01D 11/00

(54) **REFROIDISSEMENT DE LA QUEUE D'ARONDE RETENANT UNE AUBE DE TURBOMACHINE**
KÜHLUNG DES SCHWALBENSCHWANZES ZUR BEFESTIGUNG EINER TURBOMASCHINENSCHAUFEL
COOLING OF THE DOVETAIL POST ANCHORING A TURBOMACHINE BLADE

(30) Priorité: 10.10.2011 FR 1159131
(43) Date de publication de la demande: 20.08.2014
(73) Titulaire: Safran Aircraft Engines, 75015 Paris (FR)
(72) Inventeur: DA COSTA, Emmanuel, F-77550 Moissy-Cramayel Cedex (FR); GENDRAUD, Alain, Dominique, F-77550 Moissy-Cramayel Cedex (FR); MARTET, Renaud, F-77550 Moissy-cramyel Cedex (FR); SICARD, Josselin, F-77550 Moissy-cramayel Cedex (FR); VARIN, Bruno, André, Jean, F-77550 Moissy-cramayel Cedex (FR)
(74) Mandataire: Gevers & Orès
(86) Numéro de dépôt international: PCT/FR2012/052304
(87) Numéro de publication internationale: WO 2013/054043

(56) Documents cités:
- EP-A1- 0 859 127
- EP-A1- 1 764 480
- GB-A- 2 409 240
- GB-A- 2 411 697
- US-A- 5 573 377

## Description

La présente invention concerne le domaine des turboréacteurs.

Un turboréacteur multi-flux (par exemple double flux), pour la propulsion d'avions de transport, comprend généralement une soufflante amont délivrant un flux d'air annulaire, ce flux comprenant une partie annulaire centrale, primaire, qui alimente le moteur entraînant la soufflante, ainsi qu'une partie annulaire extérieure, secondaire, destinée à être éjectée dans l'atmosphère tout en fournissant une fraction importante de la poussée.

Afin d'assurer la compression de ce flux d'air annulaire, le turboréacteur est équipé d'un ensemble de roues munies d'aubes de grandes dimensions, qui sont fixées à des disques par l'intermédiaire de bulbes et d'alvéoles dont chacun des disques et aubes sont pourvues, les bulbes du disque étant de forme complémentaire à celle des alvéoles de l'aube et aptes à coopérer avec celle-ci, les alvéoles du disque étant de forme complémentaire à celle des bulbes de l'aube aptes à avec coopérer ceux-ci.

Du fait d'une limite d'utilisation en température du turboréacteur, l'extrémité du disque, qui en constitue la partie du disque la plus proche de la veine, doit être refroidie.

Actuellement, ce refroidissement est réalisé par le passage, dans le fond des alvéoles du disque, d'un flux d'air de refroidissement. A cette fin, chaque bulbe de l'aube est agencé par rapport à l'une des alvéoles du disque de manière à ménager entre ceux-ci, lorsque ledit bulbe coopère avec ladite alvéole, un canal principal pour le passage du flux d'air de refroidissement, un clinquant étant par ailleurs disposé entre ledit disque et ladite aube. Ce flux d'air, après avoir traversé le canal principal, et ainsi refroidi la zone limitrophe à celui-ci, peut ensuite être rejeté dans le flux d'air annulaire.

Dans cette configuration, le flux d'air de refroidissement permet essentiellement de refroidir l'alvéole et le fond du bulbe du disque, au détriment du sommet du bulbe. Or, le sommet du bulbe constitue pourtant la zone du disque la plus contrainte thermiquement et qui doit donc être le plus refroidie. Il en résulte actuellement une inefficacité en termes de refroidissement du disque.

Le document GB 2 409 240 A divulgue à la figure 11 une configuration analogue dans laquelle le sommet du bulbe du disque a été pourvu de cavités longitudinales (60) augmentant son refroidissement.

L'objet de la présente invention est d'améliorer l'efficacité de refroidissement du disque d'un turboréacteur tel que défini ci-dessus.

A cette fin, selon l'invention, l'ensemble pour turbomachine, comprenant un disque et une aube présentant chacun un ensemble de bulbes et d'alvéoles, les bulbes du disque étant aptes à coopérer avec les alvéoles de l'aube, les alvéoles du disque étant aptes à coopérer avec les bulbes de l'aube, au moins l'un desdits bulbes de l'aube étant agencé par rapport à l'une desdites alvéoles du disque de manière à ménager entre ceux-ci, lorsque ledit bulbe coopère avec ladite alvéole, un canal principal pour le passage d'un flux d'air de refroidissement, ensemble comprenant en outre un clinquant apte à être disposé au moins partiellement entre ledit disque et ladite aube, est remarquable en ce que :
- ledit clinquant est apte à recouvrir principalement l'un desdits bulbes du disque et à être maintenu, radialement par rapport audit disque, par ledit bulbe du disque et l'alvéole de l'aube apte à coopérer avec celui-ci, lorsque ceux-ci coopèrent effectivement ; et
- ledit bulbe du disque présente au moins une cavité longitudinale apte à former avec ledit clinquant, lorsque celui-ci recouvre ledit bulbe du disque, un canal secondaire pour le passage dudit flux d'air de refroidissement.

Ainsi, grâce à la présente invention, le flux d'air de refroidissement est directement acheminé jusqu'au sommet de chaque bulbe du disque, ce qui permet de refroidir plus efficacement cette zone particulièrement sensible du disque, ce qui autorise donc à prélever moins de flux d'air utile à la propulsion de l'avion et, de fait, permet d'améliorer la performance globale du turboréacteur.

Dans le cas où le bulbe du disque destiné à être recouvert par le clinquant est disposé entre deux alvéoles dudit disque, le clinquant présente avantageusement, d'un côté, une extrémité longue destinée à recouvrir au moins partiellement l'une desdites alvéoles, et, de l'autre côté, une extrémité courte. Une telle dissymétrie du clinquant présente l'avantage de faciliter son montage.

Un autre avantage de cette dissymétrie est que l'extrémité longue du clinquant peut être prolongée par des moyens de blocage axial dudit clinquant vis-à-vis de l'alvéole recouverte par ladite extrémité longue.

Dans un mode de réalisation avantageux, le bulbe du disque présente au moins deux cavités longitudinales séparées par un sommet dudit bulbe et aptes à former, lorsque le clinquant recouvre ledit bulbe, deux canaux secondaires pour le passage du flux d'air de refroidissement. Ainsi, la conservation d'un sommet au niveau du bulbe du disque, séparant deux canaux secondaires, permet de préserver l'anti-basculement de l'aube sur le sommet du bulbe du disque, ce qui a pour avantage d'éviter toute détérioration du clinquant.

Afin d'acheminer le flux d'air de refroidissement dans les canaux secondaires, délimités par le clinquant et les bulbes du disque, l'ensemble pour turbomachine selon l'invention peut comprendre en outre un jonc d'étanchéité joignant le disque et l'aube du côté amont de ceux-ci par rapport au sens de passage des flux d'air de refroidissement principal et secondaire, ledit jonc d'étanchéité présentant un ensemble de cavités radiales par l'intermédiaire desquelles ledit flux d'air de refroidissement secondaire peut être acheminé jusque dans le canal secondaire.

Afin de canaliser le flux d'air de refroidissement en amont et de l'acheminer jusqu'en face des canaux secondaires, le jonc d'étanchéité présente également un ensemble de rainures radiales pour le passage des aubes lorsque ledit jonc d'étanchéité joint le disque et l'aube. Un passage est ainsi créé pour le flux d'air de refroidissement secondaire.

Avantageusement, les cavités radiales du jonc d'étanchéité sont agencées de manière que lesdites cavités radiales soient disposées en face des bulbes du disque lorsque le jonc d'étanchéité joint le disque et l'aube. De plus, afin d'assurer que chaque cavité radiale soit correctement disposée en face de chaque bulbe du disque, l'ensemble pour turbomachine selon l'invention comprend en outre un anneau mobile présentant un ensemble de saillies radiales aptes à être logées dans les rainures radiales du jonc d'étanchéité pour empêcher toute rotation dudit jonc d'étanchéité.

Selon un premier mode de réalisation, l'anneau mobile est agencé pour engendrer un arrêt axial des aubes en amont par rapport au sens de passage des flux d'air de refroidissement principal et secondaire.

Selon un deuxième mode de réalisation, le jonc d'étanchéité et l'anneau mobile présentent respectivement autant de rainures radiales et de saillies radiales que le nombre de bulbes d'aubes destinées à coopérer avec le disque, et l'anneau mobile est agencé pour engendrer un arrêt axial des aubes à l'amont par rapport au sens de passage des flux d'air de refroidissement principal et secondaire.

L'invention concerne également une turbomachine comprenant au moins un ensemble selon l'un des modes de réalisation décrits ci-dessus.

Les figures du dessin annexé feront bien comprendre comment l'invention peut être réalisée. Sur ces figures, des références identiques désignent des éléments techniques semblables.
La figure 1 est un schéma, suivant un plan de coupe transversal, d'une turbomachine selon l'invention.
La figure 2 est un schéma, suivant un plan de coupe transversal, d'un ensemble pour turbomachine selon l'invention, dont le disque et une aube sont représentés de façon partielle au niveau de leur jonction.
La figure 3 est une vue en perspective des sommets du disque et d'une aube, séparés par un clinquant, lorsque ceux-ci coopèrent.
La figure 4 est une vue en perspective du sommet du disque de la figure 3.
La figure 5 est une vue en perspective du clinquant de la figure 3.
La figure 6 est une vue en perspective du sommet du disque de la figure 3, lorsque celle-ci est recouverte par le clinquant.
La figure 7 est une vue en perspective de l'ensemble pour turbomachine selon l'invention, comprenant également un jonc d'étanchéité et un anneau mobile.
La figure 8 est une vue en perspective de l'ensemble pour turbomachine de la figure 7, sans l'anneau mobile.
La figure 9 est une vue en perspective d'une portion du jonc d'étanchéité, selon un premier mode de réalisation de celui-ci.
La figure 10 est une vue en perspective du jonc de la portion du jonc d'étanchéité de la figure 9, lorsque celui-ci coopère avec l'anneau mobile.
La figure 11 est une vue en perspective de l'ensemble pour turbomachine équipé du jonc d'étanchéité et de l'anneau mobile des figures 9 et 10.
La figure 12 est une vue en perspective d'une portion du jonc d'étanchéité, selon un deuxième mode de réalisation de celui-ci.
La figure 13 est une vue en perspective du jonc de la portion du jonc d'étanchéité de la figure 12, lorsque celui-ci coopère avec l'anneau mobile.
La figure 14 est une vue en perspective de l'ensemble pour turbomachine équipé du jonc d'étanchéité et de l'anneau mobile des figures 12 et 13.

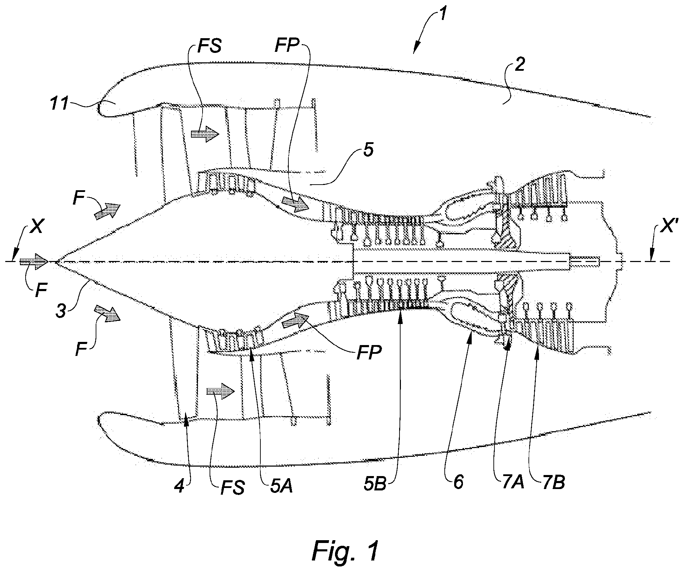

La turbomachine 1 de la figure 1 est du type à double-flux et double-corps, présentant une symétrie de révolution autour d'un axe X-X'. De manière connue, cette turbomachine 1 comprend, au sein d'une nacelle 2 servant d'enveloppe à ses différents organes, une entrée d'air par laquelle un flux d'air entrant F peut pénétrer pour traverser ensuite une soufflante d'entrée 4, disposée autour d'un cône d'entrée d'air 3 qui permet le guidage aérodynamique et la répartition du flux total F autour de l'axe X-X'. Ce flux d'air F est alors séparé en deux flux respectivement primaire FP et secondaire FS, via un carter intermédiaire 5 dont l'extrémité forme un bec séparateur.

Dans la suite de la description, les termes « amont » et « aval » se rapportent à des positions axiales le long de l'axe longitudinal X-X' dans le sens de l'écoulement du flux d'air dans le turboréacteur 1.

Le flux secondaire FS traverse un étage de redresseur pour ensuite être éjecté en aval de la turbomachine. Le flux primaire FP traverse successivement un étage de compression basse pression 6A, un étage de compression haute pression 6B, une chambre de combustion 7, un étage de turbine haute pression 8A et un étage de turbine basse pression 8B, pour, enfin, être éjecté hors de la turbomachine à travers une tuyère (non référencée).

La nacelle 2 de ce turboréacteur est annulaire et disposée de manière au moins approximativement coaxiale autour de l'axe longitudinal X-X'. Elle permet de canaliser les flux gazeux générés par la turbomachine en définissant des lignes d'écoulement aérodynamique internes et externes pour des flux gazeux.

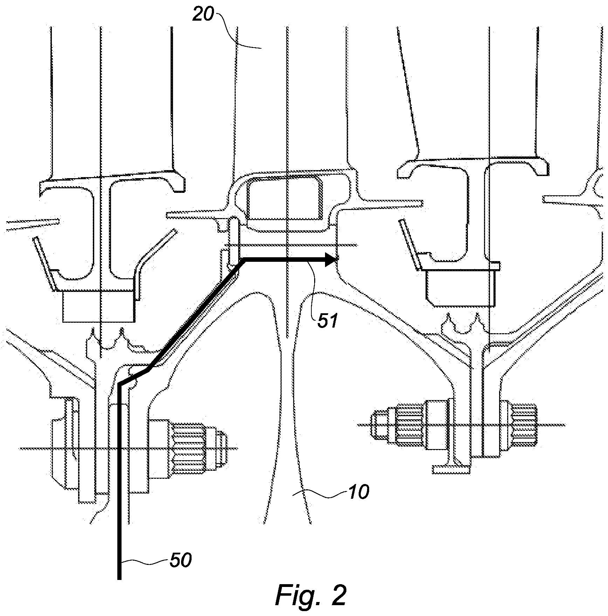

Comme représenté sur la figure 2, l'un des disques 10 de la turbomachine 1 de la figure 1, apte à tourner autour de l'axe X-X' de ladite turbomachine, présente un ensemble de connexions par l'intermédiaire desquelles une pluralité d'aubes, dont l'aube 20, sont fixées à celui-ci. Afin de refroidir la tête du disque 10, qui constitue la zone la plus proche de la veine principal, une portion 50 du flux d'air primaire FP est prélevé, de sorte qu'au moins une partie ce celui-ci, désigné par la référence 51 sur la figure 2 et dénommé par la suite flux d'air de refroidissement principal, traverse les connexions entre le disque 10 et les aubes 20.

Les connexions entre le disque 10 et les aubes 20 sont assurées par un ensemble de bulbes et d'alvéoles dont sont pourvus chacun d'eux. Le disque 10 présente ainsi, au niveau de son extrémité, un ensemble de bulbes 11 et d'alvéoles 12, tandis que l'aube 20 présente, au niveau de son extrémité destinée à coopérer avec le disque 10, un ensemble de bulbes 21 et d'alvéoles 22. La forme et les dimensions des bulbes 11 du disque 10 sont déterminées de manière que ceux-ci soient aptes à coopérer avec les alvéoles 22 de l'aube 20. De même, les bulbes 21 de l'aube 20 sont déterminées de manière que ceux-ci soient aptes à coopérer avec les alvéoles 12 du disque 10. Ainsi, les aubes 20 peuvent être aisément connectées au disque 10.

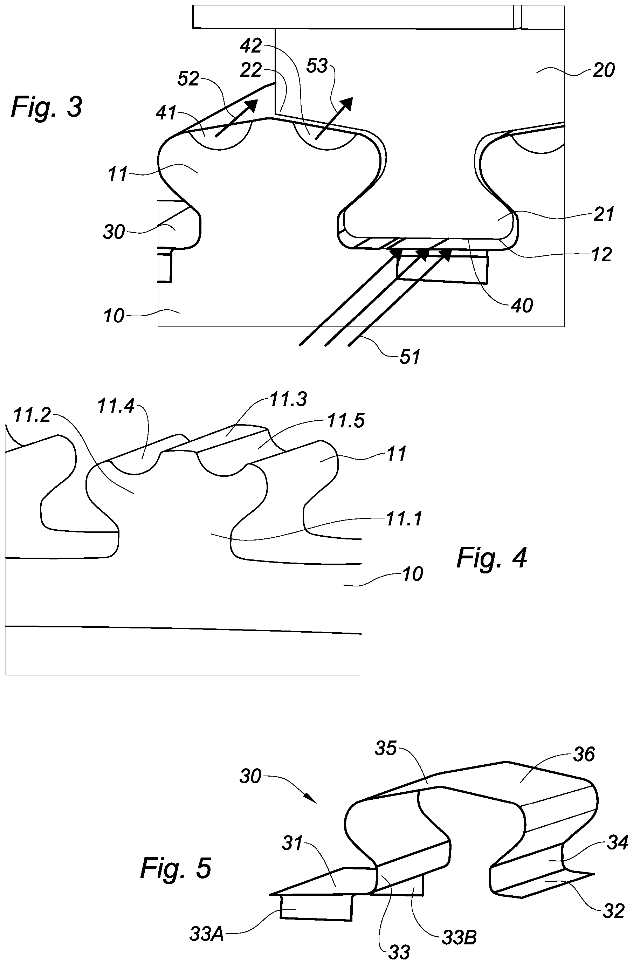

Un clinquant 30, qui sera décrit plus précisément ci-après en référence à la figure 5, est par ailleurs disposé entre le disque 10 et une aube 20.

Le passage du flux d'air de refroidissement principal 51 à proximité de l'extrémité du disque 10, en vue de refroidir ce dernier, est assuré, lorsque le disque 10 et l'aube 20 coopèrent et que le clinquant 30 est disposé entre ces derniers, par le ménagement d'un canal principal 40 délimité, d'une part, par le clinquant 30, et, d'autre part, par le bulbe 21 de l'aube 20. De cette manière, l'alvéole 12 du disque 10 peut être refroidie par le passage du flux d'air 51.

Conformément à la présente invention, le bulbe 11 du disque 10, représenté de façon isolée sur la figure 4 et qui comporte une portion inférieure 11.1 de section amoindrie et une portion supérieure 11.2 de section plus large, présente, au niveau de la portion supérieure 11.2, deux cavités longitudinales 11.4 et 11.5 séparées par un sommet 11.3. Par ailleurs, le clinquant 30, représenté de façon isolée sur la figure 5, présente une forme semblable à celle des bulbes 11 et alvéoles 12 du disque 10. En particulier, le clinquant 30 comprend deux portions supérieures 35 et 36, aptes à recouvrir les cavités longitudinales 11.4 et 11.5 du disque 10, ainsi que deux portions latérales 33 et 34 destinées à recouvrir les parois latérales du bulbe 11. Etant données les sections (amoindrie et large) du bulbe 11, le clinquant 30 est flexible, de sorte que celui-ci puisse être inséré dans le bulbe 11. De plus, le clinquant 30 présente une première extrémité 31, longue, dans le prolongement de la portion latérale 33, et une deuxième extrémité 32, plus courte que l'extrémité 31, dans le prolongement de la portion latérale 34.

Le clinquant 30, de faible épaisseur, est ainsi apte à recouvrir principalement le bulbe 11 et à être maintenu, radialement par rapport au disque 10, par ledit bulbe 11 et l'alvéole 22, lorsque ceux-ci coopèrent effectivement.

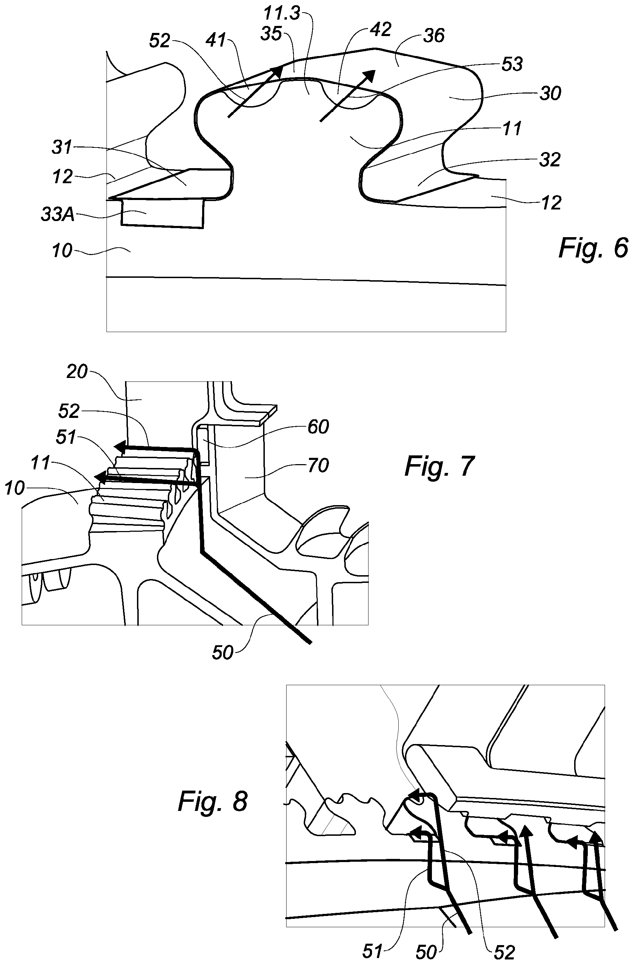

Lorsque le clinquant 30 est disposé sur le bulbe 11 (figure 6), les portions supérieures 35 et 36 délimitent respectivement, avec les cavités longitudinales 11.4 et 11.5, deux canaux secondaires 41 et 42 pour le passage de deux flux d'air de refroidissement secondaires 52 et 53, qui permettent de refroidir la zone du disque 10 la plus soumise aux contraintes thermiques, à savoir le sommet du bulbe 11.

On notera que, dans le but de bloquer axialement le clinquant 30 vis-à-vis de l'alvéole 12 recouverte par ladite extrémité longue 31, l'extrémité longue 31 du clinquant 30 est prolongée par des moyens de blocage axial 33A et 33B, disposés de chaque côté de l'extrémité 31 de manière à s'appuyer contre les parois du disque 10 lorsque le clinquant 30 est inséré dans le bulbe 11.

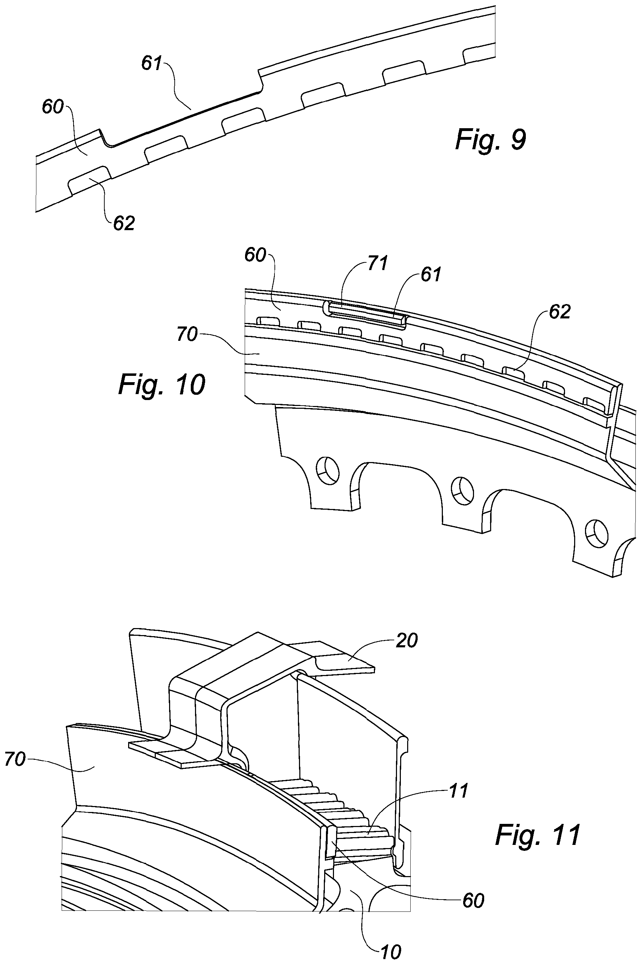

En référence à présent aux figures 7 et 8, un jonc d'étanchéité 60 est disposé contre le disque 10 et l'aube 20 de manière que celui-ci joigne ces derniers du côté amont, par rapport au sens de passage du flux d'air de refroidissement principal 51. Ce jonc d'étanchéité 60, représenté plus en détails sur la figure 9, présente un ensemble de cavités radiales 62, dont la forme est sensiblement celle d'une lunule, disposées en face des bulbes 11 du disque 10 lorsque le jonc d'étanchéité 60 joint le disque 10 et l'aube 20. Les cavités radiales 62 autorisent ainsi le passage des flux d'air de refroidissement secondaires 52 et 53, issues du flux d'air 50, jusque dans les canaux secondaires 41 et 42.

De cette manière, le flux d'air de refroidissement 50 se divise en un flux d'air principal 51, qui traverse le canal principal 40, et deux flux d'air secondaires 52 et 53, qui traversent respectivement les canaux secondaires 41 et 42 (figure 8).

On notera que l'invention peut être mise en oeuvre avec un nombre différent de canaux secondaires, dans la mesure où le bulbe 11 en présente au moins un. Il est toutefois préféré de disposer d'au moins deux canaux secondaires, de sorte que le bulbe 11 présente ainsi au moins deux cavités longitudinales (telles que les cavités 11.4 et 11.5) séparées chacune par un sommet (tel que le sommet 11.3), ce qui permet de conserver la fonction d'anti-basculement de l'aube 20 sur le sommet du bulbe 11 et ainsi de ne pas détériorer le clinquant 30.

Le jonc d'étanchéité 60 présente également un ensemble de rainures radiales 61 pour le passage des aubes, lors du montage de celles-ci, lorsque le jonc d'étanchéité 60 joint le disque 10 et l'aube 20. Ces rainures radiales 61 permettent également de fixer le jonc d'étanchéité 60 à un anneau mobile 70, qui présente à cet effet un ensemble de saillies radiales 71 de formes complémentaires aux rainures radiales 61 du jonc 60, et ainsi d'empêcher toute rotation dudit jonc d'étanchéité.

L'anneau mobile 70 est agencé, par rapport aux aubes 20, de manière à engendrer un arrêt axial de celles-ci à l'aval, par rapport au sens de passage des flux d'air de refroidissement principal 51 et secondaires 52 et 53.

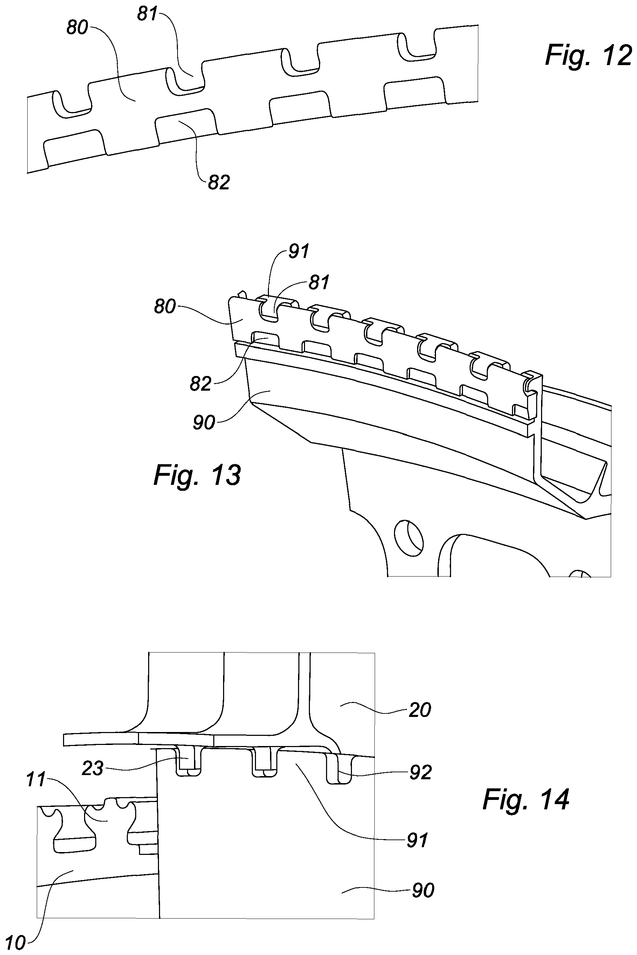

Selon une variante de l'invention, représentée sur les figures 12 à 14, le jonc d'étanchéité 60 et l'anneau mobile 70 sont remplacés respectivement par le jonc 80 et l'anneau 90. Le jonc d'étanchéité 80 présente un ensemble de cavités radiales 82 semblables aux cavités radiales 62, ainsi que des rainures radiales 81 équi-espacées. L'anneau mobile 90 présente, quant à lui, un ensemble de saillies radiales 91, équi-espacées et de forme complémentaire des rainures radiales 81, afin d'empêcher le jonc 80 de tourner vis-à-vis de l'anneau 90 (figure 13). Dans cette forme de réalisation, le nombre de saillies radiales 91 de l'anneau 90 est égal au nombre de crochets 23 de l'aube 20.

De plus, l'anneau mobile 90 est agencé, par rapport aux aubes 20, pour engendrer un arrêt axial ce celles-ci à l'amont par rapport au sens de passage des flux d'air de refroidissement principal 51 et secondaires 52 et 53.

## Revendications

1. Ensemble pour turbomachine, comprenant un disque (10) et une aube (20) présentant chacun un ensemble de bulbes (11, 21) et d'alvéoles (12, 22), les bulbes (11) du disque (10) étant aptes à coopérer avec les alvéoles (22) de l'aube (20), les alvéoles (12) du disque (10) étant aptes à coopérer avec les bulbes (21) de l'aube (20), au moins l'un desdits bulbes (21) de l'aube (20) étant agencé par rapport à l'une desdites alvéoles (12) du disque (10) de manière à ménager entre ceux-ci, lorsque ledit bulbe (21) coopère avec ladite alvéole (12), un canal principal (40) pour le passage d'un flux d'air de refroidissement principal (51), ensemble comprenant en outre un clinquant (30) apte à être disposé au moins partiellement entre ledit disque (10) et ladite aube (20), ensemble dans lequel en outre
- ledit clinquant (30) est apte à recouvrir principalement l'un des bulbes (11) du disque (10) et à être maintenu, radialement par rapport au disque (10), par ledit bulbe (11) du disque (10) et l'alvéole (22) de l'aube (20) apte à coopérer avec celui-ci, lorsque ceux-ci coopèrent effectivement ; et
- ledit bulbe (11) du disque (10) présente au moins une cavité longitudinale (11.4, 11.5) apte à former avec ledit clinquant (30), lorsque celui-ci recouvre ledit bulbe (11) du disque (10), un canal secondaire (41, 42) pour le passage d'un flux d'air de refroidissement secondaire (52, 53).

2. Ensemble selon la revendication 1, dans lequel, le bulbe (11) du disque (10) destiné à être recouvert par le clinquant (30) étant disposé entre deux alvéoles du disque (10), le clinquant (30) présente, d'un côté, une extrémité longue (31) destinée à recouvrir au moins partiellement l'une desdites alvéoles, et, de l'autre côté, une extrémité courte (32).

3. Ensemble selon la revendication 2, dans lequel l'extrémité longue (31) du clinquant (30) est prolongée par des moyens de blocage axial (33A, 33B) dudit clinquant (30) vis-à-vis de l'alvéole (12) recouverte par ladite extrémité longue (31).

4. Ensemble selon l'une des revendications 1 à 3, dans lequel le bulbe (11) du disque (10) présente au moins deux cavités longitudinales (11.4, 11.5) séparées par un sommet (11.3) dudit bulbe (11) et aptes à former, lorsque le clinquant (30) recouvre ledit bulbe (11), deux canaux secondaires (41, 42) pour le passage de deux flux d'air de refroidissement secondaires (52, 53).

5. Ensemble selon l'une des revendications précédentes, comprenant en outre un jonc d'étanchéité (60, 80) joignant le disque (10) et l'aube (20) du côté amont de ceux-ci par rapport au sens de passage des flux d'air de refroidissement principal (51) et secondaire (52, 53), ledit jonc d'étanchéité (60, 80) présentant un ensemble de cavités radiales (62, 82) par l'intermédiaire desquelles le flux d'air de refroidissement secondaire (52, 53) peut être acheminé jusque dans le canal secondaire (41, 42).

6. Ensemble selon la revendication 5, dans lequel le jonc d'étanchéité (60, 80) présente également un ensemble de rainures radiales (61, 81) pour le passage des aubes (20) lorsque ledit jonc d'étanchéité joint le disque (10) et l'aube (20), ledit ensemble comprenant en outre un anneau mobile (70, 90) présentant un ensemble de saillies radiales (71, 91) aptes à être logées dans les rainures radiales (61, 81) du jonc d'étanchéité (60, 80) pour empêcher toute rotation dudit jonc d'étanchéité (60, 80).

7. Ensemble selon la revendication 6, dans lequel l'anneau mobile (70) est agencé pour engendrer un arrêt axial des aubes (20) en amont par rapport au sens de passage des flux d'air de refroidissement principal (51) et secondaire (52, 53).

8. Ensemble selon la revendication 6, dans lequel le jonc d'étanchéité (80) et l'anneau mobile (90) présentent respectivement autant de rainures radiales (81) et de saillies radiales (91) que de crochets (23) d'aubes (20) destinées à coopérer avec le disque (10), et l'anneau mobile (90) est agencé pour engendrer un arrêt axial des aubes (20) à l'amont par rapport au sens de passage des flux d'air de refroidissement principal (51) et secondaire (52, 53).

9. Turbomachine (1) comprenant un ensemble selon l'une des revendications 1 à 8.

## Patentansprüche

1. Satz für eine Turbomaschine, umfassend eine Scheibe (10) und eine Schaufel (20), die jede einen Satz von Ausbauchungen (11, 21) und von Einbuchtungen (12, 22) aufweisen, wobei die Ausbauchungen (11) der Scheibe (10) in der Lage sind, mit den Einbuchtungen (22) der Schaufel (20) zusammenzuwirken, wobei die Einbuchtungen (12) der Scheibe (10) in der Lage sind, mit dem Ausbauchungen (21) der Schaufel (20) zusammenzuwirken, wobei mindestens eine der Ausbauchungen (21) der Schaufel (20) in Bezug auf eine der Einbuchtungen (12) der Schaufel (10) so eingerichtet ist, dass, wenn die Ausbauchung (21) mit der Einbuchtung (12) zusammenwirkt, zwischen denselben einen Hauptkanal (40) für den Durchtritt eines Haupt-Kühlluftstroms (51) ausgebildet wird, wobei der Satz weiter eine Beilage (30) umfasst, die in der Lage ist, mindestens teilweise zwischen der Scheibe (10) und der Schaufel (20) angeordnet zu werden, Satz, bei dem weiter
- die Beilage (30) in der Lage ist, im Wesentlichen eine der Ausbauchungen (11) der Scheibe (10) zu bedecken und radial in Bezug auf die Scheibe (10) von der Ausbauchung (11) der Scheibe (10) gehalten zu werden, und die Einbuchtung (22) der Schaufel (20) in der Lage ist, mit derselben zusammenzuwirken, wenn dieselben effektiv zusammenwirken; und
- die Ausbauchung (11) der Scheibe (10) mindestens eine längliche Höhlung (11.4, 11.5) aufweist, die in der Lage ist, mit der Beilage (30), wenn diese die Ausbauchung (11) der Scheibe (10) bedeckt, einen sekundären Kanal (41, 42) für den Durchtritt eines sekundären Kühlluftstroms (52, 53) zu bilden.

2. Satz nach Anspruch 1, wobei, da die Ausbauchung (11) der Scheibe (10), die dazu vorgesehen ist, von der Beilage (30) bedeckt zu werden, zwischen zwei Einbuchtungen der Scheibe (10) angeordnet ist, die Beilage (30) auf einer Seite ein langes Ende (31) aufweist, das dazu vorgesehen ist, eine der Einbuchtungen mindestens teilweise zu bedecken, und auf der anderen Seite ein kurzes Ende (32).

3. Satz nach Anspruch 2, wobei das lange Ende (31) der Beilage (30) über axiale Blockiermittel (33A, 33B) der Beilage (30) gegenüber der vom langen Ende (31) bedeckten Einbuchtung (12) verlängert ist.

4. Satz nach einem der Ansprüche 1 bis 3, wobei die Ausbauchung (11) der Scheibe (10) mindestens zwei längliche Höhlungen (11.4, 11.5) aufweist, die über eine Spitze (11.3) der Ausbauchung (11) getrennt und in der Lage sind, wenn die Beilage (30) die Ausbauchung (11) bedeckt, zwei sekundäre Kanäle (41, 42) für den Durchtritt von zwei sekundären Kühlluftströmen (52, 53) zu bilden.

5. Satz nach einem der vorstehenden Ansprüche, weiter einen Dichtungskranz (60, 80) umfassend, der die Scheibe (10) und die Schaufel (20) auf der in Bezug auf die Durchtrittsrichtung der Haupt- (51) und sekundären Kühlluftströme (52, 53) stromaufwärtigen Seite derselben verbindet, wobei der Dichtungskranz (60, 80) einen Satz von radialen Höhlungen (62, 82) aufweist, mittels denen der sekundäre Kühlluftstrom (52, 53) bis in den sekundären Kanal (41, 42) geleitet werden kann.

6. Satz nach Anspruch 5, wobei der Dichtungskranz (60, 80) ebenfalls einen Satz von radialen Rinnen (61, 81) für den Durchtritt der Schaufeln (20) aufweist, wenn der Dichtungskranz die Scheibe (10) und die Schaufel (20) verbindet, wobei der Satz weiter einen beweglichen Ring (70, 90) umfasst, der einen Satz von radialen Vorsprüngen (71, 91) aufweist, die in der Lage sind, in den radialen Rinnen (61, 81) des Dichtungskranzes (60, 80) untergebracht zu werden, um jede Drehung des Dichtungskranzes (60, 80) zu verhindern.

7. Satz nach Anspruch 6, wobei der bewegliche Ring (70) dafür eingerichtet ist, in Bezug auf die Durchtrittsrichtung der Haupt- (51) und sekundären Kühlluftströme (52, 53) stromaufwärts einen axialen Anschlag der Schaufeln (20) zu bewirken.

8. Satz nach Anspruch 6, wobei der Dichtungskranz (80) und der bewegliche Ring (90) jeweils ebenso viele radiale Rinnen (81) und radiale Vorsprünge (91) wie Schaufel- (20) Haken (23) aufweist, die dazu vorgesehen sind, mit der Scheibe (10) zusammenzuwirken, und der bewegliche Ring (90) dafür eingerichtet ist, in Bezug auf die Durchtrittsrichtung der Haupt- (51) und sekundären Kühlluftströme (52, 53) stromaufwärts einen axialen Anschlag der Schaufeln (20) zu bewirken.

9. Turbomaschine (1), die einen Satz nach einem der Ansprüche 1 bis 8 umfasst.

## Claims

1. Assembly for turbomachine, comprising a disc (10) and a blade (20) each having an assembly of bulbs (11, 21) and of pockets (12, 22), with the bulbs (11) of the disc (10) able to cooperate with the pockets (22) of the blade (20), with the pockets (12) of the disc (10) being able to cooperate with the bulbs (21) of the blade (20), with at least one of said bulbs (21) of the blade (20) being arranged in relation to one of said pockets (12) of the disc (10) in such a way as to arrange between the latter, when said bulb (21) cooperates with said pocket (12), a main passage (40) for the passage of a main cooling air flow (51), assembly further comprising a foil (30) able to be arranged at least partially between said disc (10) and said blade (20), assembly wherein furthermore
- said foil (30) is able to cover mainly one of the bulbs (11) of the disc (10) and be held, radially with respect to the disc (10), by said bulb (11) of the disc (10) and the pocket (22) of the blade (20) able to cooperate with the latter, when these two are effectively cooperating; and
- said bulb (11) of the disc (10) has at least one longitudinal cavity (11.4, 11.5) able to form with said foil (30), when the latter covers said bulb (11) of the disc (10), a secondary passage (41, 42) for the passage of a secondary cooling air flow (52, 53).

2. Assembly according to claim 1, wherein, the bulb (11) of the disc (10) intended to be covered by the foil (30) being arranged between two pockets of the disc (10), the foil (30) has, on the one side, a long end (31) intended to at least partially cover one of said pockets, on the other side, a short end (32).

3. Assembly according to claim 2, wherein the long end (31) of the foil (30) is extended by means of axial blocking (33A, 33B) of said foil (30) with regards to the pocket (12) covered by said long end (31).

4. Assembly according to one of claims 1 to 3, wherein the bulb (11) of the disc (10) has at least two longitudinal cavities (11.4, 11.5) separated by a top (11.3) of said bulb (11) and able to form, when the foil (30) covers said bulb (11), two secondary passages (41, 42) for the passage of two secondary cooling air flows (52, 53).

5. Assembly according to one of the preceding claims, further comprising a seal retaining ring (60, 80) joining the disc (10) and the blade (20) on the upstream side of the latter with respect to the direction of the passage of the main (51) and secondary (52, 53) cooling air flows, said seal retaining ring (60, 80) having an assembly of radial cavities (62, 82) by the intermediary of which the secondary cooling air flow (52, 53) can be conveyed to the secondary passage (41, 42).

6. Assembly according to claim 5, wherein the seal retaining ring (60, 80) also has an assembly of radial grooves (61, 81) for the passage of the blades (20) when said seal retaining ring joins the disc (10) and the blade (20), said assembly further comprising a movable ring (70, 90) that has an assembly of radial protrusions (71, 91) able to be housed in the radial grooves (61, 81) of the seal retaining ring (60, 80) in order to prevent any rotation of said seal retaining ring (60,80).

7. Assembly according to claim 6, wherein the movable ring (70) is arranged to generate an axial stoppage of the blades (20) upstream with respect to the direction of passage of the main (51) and secondary (52, 53) cooling air flows.

8. Assembly according to claim 6, wherein the seal retaining ring (80) and the movable ring (90) respectively have as many radial grooves (81) and radial protrusions (91) as hooks (23) of blades (20) intended to cooperate with the disc (10), and the movable ring (90) is arranged to generate an axial stoppage of the blades (20) upstream with respect to the direction of passage of the main (51) and secondary (52, 53) cooling air flows.

9. Turbomachine (1) comprising an assembly according to one of claims 1 to 8.
